# EUROPEAN PATENT APPLICATION

(11) **EP 4 432 412 A1**
(43) Date of publication of application: **18.09.2024**
(21) Application number: 24151322.5
(22) Date of filing: 11.01.2024
(51) Int. Cl.: H01M 10/04, H01M 50/209, H01M 50/211, H01M 50/242, H01M 50/289, H01M 50/291

(54) **BATTERY MODULE**

(30) Priority: 15.03.2023 KR 20230033849
(71) Applicant: Samsung SDI Co., Ltd., Yongin-si, Gyeonggi-do 17084 (KR)
(72) Inventor: HWANG, Yu Sik, 16678 Suwon-si (KR)
(74) Representative: Marks & Clerk LLP

(57) **Abstract**

The battery module includes: a battery cell having a first surface and a second surface disposed to intersect the first surface; a first plate disposed to face the first surface; a second plate disposed to face the second surface; and a buffer unit interposed between the first plate and the second plate and changing a location of the second plate relative to the first plate in association with volume change of the battery cell.

## Description

### Field of the Invention

The present disclosure relates to a battery module.

### Description of the Related Art

In general, with rapid increase in demand for portable electronics, such as notebook computers, video cameras, and portable phones, and commercialization of robots and electric vehicles, various studies have been actively carried out to develop high performance secondary batteries that allow repeated charge and discharge.

Secondary batteries are widely used for power generation or energy storage not only in small devices, such as portable electronics, but also in medium/large devices, such as electric vehicles and energy storage systems (ESSs). In particular, in medium/large devices, multiple battery cells are electrically connected to each other to form a battery module in order to enhance output and/or capacity of the battery.

A conventional battery module maintains durability by applying a certain level of sheet pressure to the battery cells through a housing structure disposed to surround the battery cells. However, such a structure can promote degradation of the battery cells through continuous increase in pressure generated between the battery cells and the housing in the event of a swelling phenomenon causing expansion of the battery cells due to rapid charge, overcharge, over-discharge, short circuit, high temperature, and the like.

The background technique of the present disclosure is disclosed in Korean Patent Registration No. 10-2019884 (Registration date: September 3, 2019, Title of the invention: Battery module, Battery pack comprising the same, and Automobiles comprising the same).

### Summary of the Invention

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

Various embodiments are directed to a battery module capable of relieving increase in pressure due to expansion of battery cells.

In embodiments, a battery module includes: a battery cell having a first surface and a second surface disposed to intersect the first surface; a first plate disposed to face the first surface; a second plate disposed to face the second surface; and a buffer unit interposed between the first plate and the second plate and changing a location of the second plate relative to the first plate in association with volume change of the battery cell.

The battery cell may be provided in plural and the plural battery cells may be sequentially arranged in a direction parallel to the first surface.

The buffer unit may shift the second plate in a direction parallel to the first surface in association with volume change of the battery cell.

The buffer unit may be provided in plural and the plural buffer units may be provided to at least two corners among corners of the battery module.

The buffer unit may include: a first support member extending from the first plate; a second support member extending from the second plate and coupled to the first support member; and a buffer member stretchably provided to the first support member and increasing or decreasing a length of the first support member in a stretching/contraction direction.

The first support member may be disposed parallel to the first surface.

The buffer member may be formed symmetrically with respect to a centerline of the first plate.

The buffer member may be elastically deformable.

A difference between a contraction length and an extension length of the buffer member may be 2 mm or less.

The buffer member may include a wrinkle portion protruding in a direction intersecting a longitudinal direction of the first support member.

The buffer member may include two or less wrinkle portions.

The second support member may include: a first extension extending from the second plate and disposed parallel to the first support member; and a second extension extending from the first extension towards the first support member, spaced apart from the second plate, and coupled to the first support member, and the wrinkle portion may protrude from the first support member towards a space between the second extension and the second plate.

The winkle portion may include a first bent portion tilted with respect to the longitudinal direction of the first support member; and a second bent portion tilted with respect to a longitudinal direction of the first bent portion and having one end connected to one end of the first bent portion.

The one end of each of the first bent portion and the second bent portion may be disposed in the space between the second extension and the second plate.

The other end of each of the first bent portion and the second bent portion may be disposed coplanar with an outer surface of the first support member.

At least some of the above and other features of the invention are set out in the claims.

In the battery module according to the present disclosure, the buffer unit shifts the second plate with respect to the first plate corresponding to variation of the battery cell upon expansion of the battery cell due to rapid charging and the like, thereby preventing degradation of the battery cell due to increase in pressure generated between the second plate and the battery cell.

In the battery module according to the present disclosure, the buffer member may be formed symmetrically with respect to the centerline of the first plate, thereby preventing the second plate from moving in a tilted state while preventing local increase in pressure between the battery cell and the second plate.

In the battery module according to the present disclosure, the buffer member may be elastically deformable, thereby generating a sufficient sheet pressure between the battery cell and the second plate through elastic restoration thereof upon normal operation of the battery cell while restoring the second plate to an initial location thereof through contraction by elastic restoration thereof upon volume contraction of the battery cell.

### Brief Description of the Drawings

FIG. 1 is a perspective view of a battery module according to an embodiment of the present disclosure.
FIG. 2 is an exploded perspective view of the battery module according to the embodiment of the present disclosure.
FIG. 3 is a plan view of the battery module according to the embodiment of the present disclosure.
FIG. 4 is a side view of the battery module according to the embodiment of the present disclosure.
FIG. 5 is a side view of a buffer unit according to the embodiment of the present disclosure.
FIG. 6 is a side view illustrating a stretched state of the buffer unit shown in FIG. 5.
FIG. 7 is a plan view of the buffer unit according to the embodiment of the present disclosure.
FIG. 8 is an enlarged view of a buffer member according to the embodiment of the present disclosure.
FIG. 9 to FIG. 11 are schematic views illustrating operation of the battery module according to the embodiment of the present disclosure.

### Detailed Description of the Invention

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Advantages and features of the present disclosure and methods of achieving the advantages and features will be clear with reference to embodiments described in detail below together with the accompanying drawings. However, the present disclosure is not limited to the embodiments disclosed herein but will be implemented in various forms. The embodiments of the present disclosure are provided so that the present disclosure is completely disclosed, and a person with ordinary skill in the art can fully understand the scope of the present disclosure. The present disclosure will be defined only by the scope of the appended claims. Meanwhile, the terms used in the present specification are for explaining the embodiments, not for limiting the present disclosure.

Terms, such as first, second, A, B, (a), (b) or the like, may be used herein to describe components. Each of these terminologies is not used to define an essence, order or sequence of a corresponding component but used merely to distinguish the corresponding component from other component(s). For example, a first component may be referred to as a second component, and similarly the second component may also be referred to as the first component.

Throughout the specification, when a component is described as being "connected to," or "coupled to" another component, it may be directly "connected to," or "coupled to" the other component, or there may be one or more other components intervening therebetween. In contrast, when an element is described as being "directly connected to," or "directly coupled to" another element, there can be no other elements intervening therebetween.

The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Hereinafter, embodiments of the present disclosure will be described in detail with reference to the accompanying drawings.

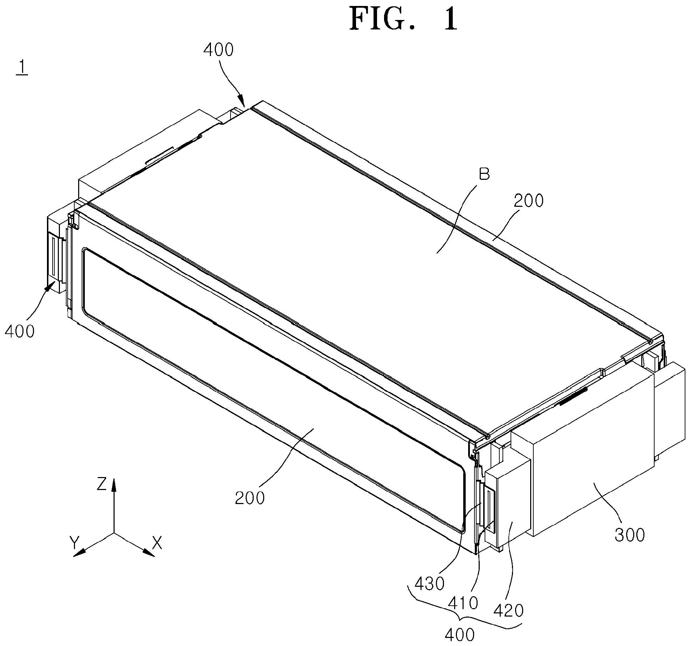

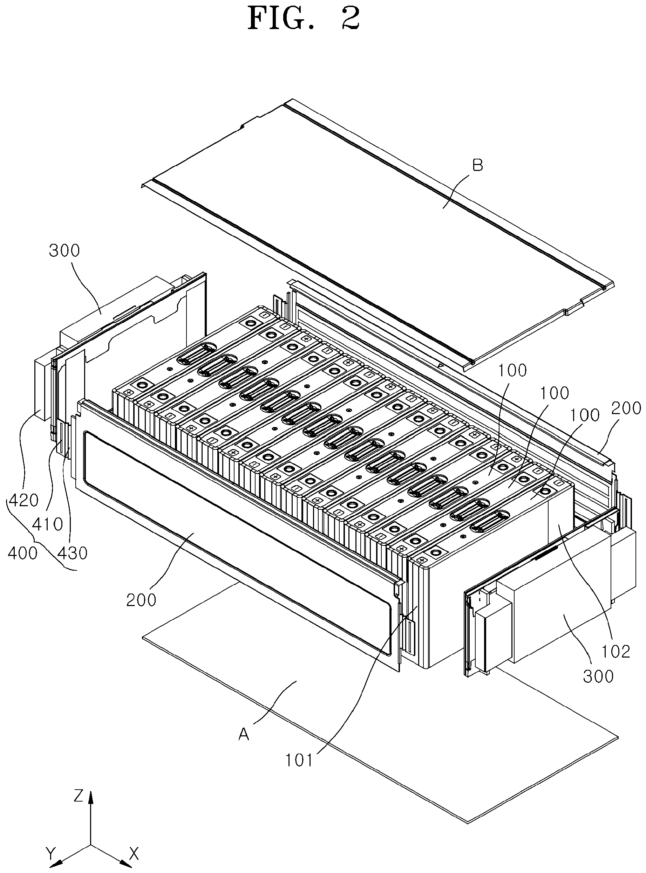

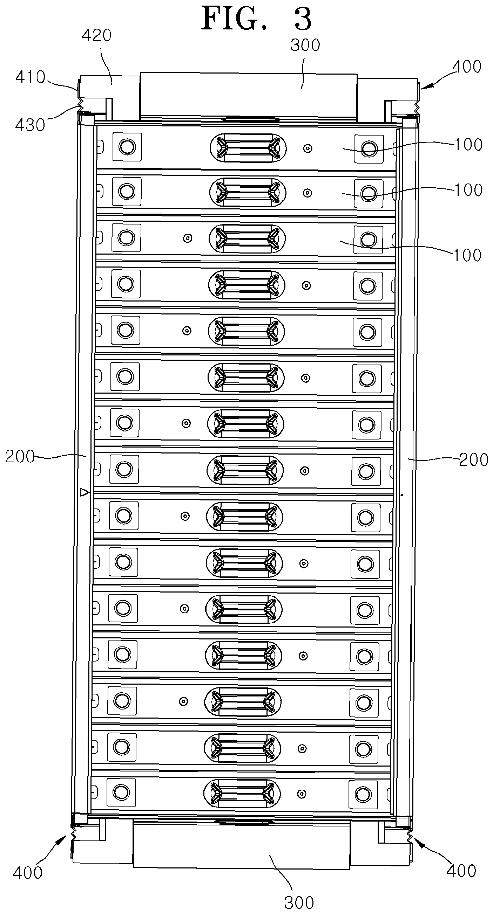

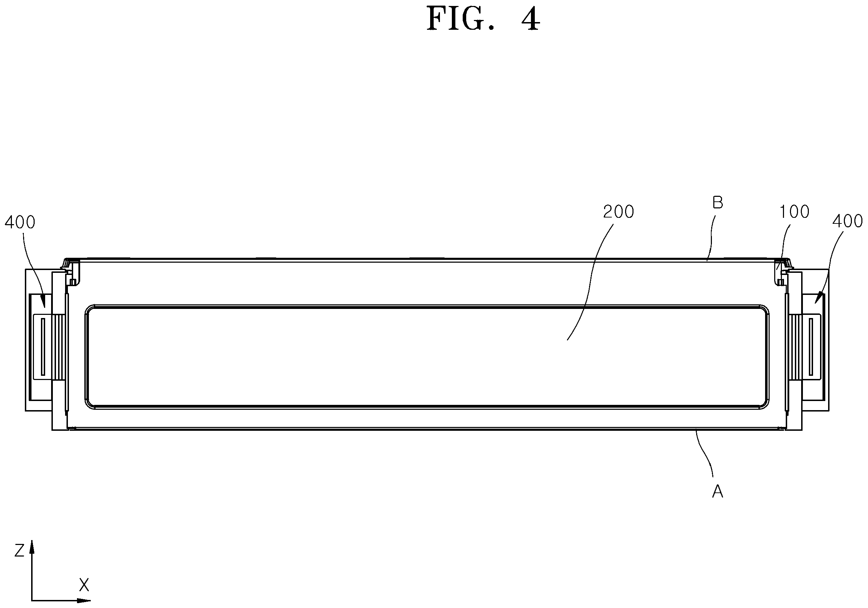

FIG. 1 is a perspective view of a battery module according to an embodiment of the present disclosure, FIG. 2 is an exploded perspective view of the battery module according to the embodiment of the present disclosure, FIG. 3 is a plan view of the battery module according to the embodiment of the present disclosure, and FIG. 4 is a side view of the battery module according to the embodiment of the present disclosure.

Referring to FIG. 1 to FIG. 4, the battery module 1 includes a battery cell 100, a first plate 200, a second plate 300, and a buffer unit 400.

The battery cell 100 acts as a unit structure adapted to store and supply electric power in the battery module 1.

The battery cell 100 may be exemplified as a pouch type secondary cell (not shown), which is provided therein with an electrode assembly (not shown) having a cathode plate (not shown) and an anode plate (not shown) at both sides of a separator (not shown) interposed therebetween, and can be charged or discharged with a preset quantity of electricity.

The battery cell 100 may have a parallelepiped shape including a first surface 101, a second surface 102 disposed to intersect the first surface 101, an upper surface, and a lower surface.

The first surface 101 may be exemplified as a surface parallel to the X-axis among circumferential surfaces of the battery cell 100 parallel to the Z-axis in FIG. 1 to FIG. 4. The first surface 101 may be realized as a pair of first surfaces 101. The pair of first surfaces 101 may be separated a predetermined distance from each other in the Y-axis direction and may be parallel to each other to face each other.

The second surface 102 may be exemplified as a surface parallel to the Y-axis among the circumferential surfaces of the battery cell 100 parallel to the Z-axis in FIG. 1 to FIG. 4. The second surface 102 may be realized as a pair of second surfaces 102. The pair of second surfaces 102 may be separated a predetermined distance from each other in the X-axis direction and may be parallel to each other to face each other. The second surface 102 may have a larger area than the first surface 101.

The battery cell 100 may be disposed between a bottom plate A and a top plate B, which are spaced apart from each other in the Z-axis direction and parallel to each other. The bottom plate A and the top plate B may be disposed parallel to the XY plane. The battery cell 100 may be disposed such that the lower surface and the upper surface of the battery cell 100 face an upper surface of the bottom plate A and a lower surface of the top plate B, respectively. The lower surface of the battery cell 100 may be seated on and supported by the upper surface of the bottom plate A.

The battery cell 100 may be provided in plural. The plurality of battery cells 100 may be sequentially arranged in a direction parallel to the first surface 101, that is, in a direction parallel to the X-axis in FIG. 1 to FIG. 4. The number of battery cells 100 is not limited to that shown in FIG. 2 and may be changed according to the size of the battery module 1 and the like. The plurality of battery cells 100 may be electrically connected to each other via a busbar (not shown) and the like. The plurality of battery cells 100 may be connected to each other in series or in parallel.

The first plate 200 is disposed to face the first surfaces 101 of the battery cells 100. The first plate 200 may support the battery cells 100 in a perpendicular direction to the first surface 101 while protecting the battery cells 100 from external impact, foreign matter, and the like.

The first plate 200 may have a substantially plate shape. The first plate 200 extends in an arrangement direction of the plurality of battery cells 100 and may be disposed parallel to the first surfaces 101 thereof.

The first plate 200 may be realized as a pair of first plates 200. The pair of first plates 200 may be disposed to allow inner surfaces thereof to individually face the pair of first surfaces 101 of one of the battery cells 100. The pair of first plates 200 may have the inner surfaces contacting the first surfaces 101, respectively. Each of the first plates 200 may have a greater length than the sum of the lengths of the first surfaces 101 of the battery cells 100, which are parallel to the X axis. Accordingly, the inner surface of each of the first plates 200 may contact all of the first surfaces 101 of the plurality of battery cells 100.

The first plate 200 may be coupled at upper and lower ends thereof to the bottom plate A and the top plate B, respectively. Here, the first plate 200 may be coupled to the bottom plate A and the top plate B by various coupling methods, such as bolting, welding, bonding, fitting, latching, and the like.

The first plate 200 may include a material having high rigidity, such as metals, high-strength plastics, and the like, to prevent damage and breakage due to external force applied from outside or pressure applied from the battery cells 100. The inner surface of the first plate 200 in direct contact with the battery cells 100 may be formed of an insulating material so as to be electrically isolated from the battery cells 100.

The second plate 300 is disposed to intersect the first plate 200 while facing the second surface 102 of the battery cell 100. The first plate 200 may support the battery cells 100 in a perpendicular direction to the second surface 102 while protecting the battery cells 100 from external impact, foreign matter, and the like.

The second plate 300 may have a substantially plate shape. The second plate 300 extends in a direction perpendicular to the arrangement direction of the plurality of battery cells 100 and may be disposed parallel to the second surface 102.

The second plate 300 may be realized as a pair of second plates 300. The pair of second plates 300 may be disposed to allow inner surfaces thereof to individually face the second surfaces 101 of a pair of battery cells 100 disposed at opposite ends of the battery module among the plurality of battery cells 100. The inner surfaces of the pair of second plates 300 may contact the second surfaces 102, respectively. The second plate 300 may have a greater length than the entire length of the second surface 102 parallel to the Y axis. Accordingly, the inner surface of the second plate 300 may contact the entire area of the second surface 102.

Each of the second plates 300 may be coupled at opposite ends thereof to the pair of first plates 200 via the buffer unit 400 described below in the longitudinal direction thereof. Upper and lower ends of the second plate 300 may be separated from the bottom plate A and the top plate B, respectively, or may be slidably coupled to the bottom plate A and the top plate B, respectively. Accordingly, the second plates 300 may be moved with respect to the first plates 200 by operation of the buffer unit 400 described below.

The second plate 300 may include a material having high rigidity, such as metals, high-strength plastics, and the like, to prevent damage and breakage due to external force applied from outside or pressure applied from the battery cell 100. The inner surface of the second plate 300 in direct contact with the battery cell 100 may be formed of an insulating material so as to be electrically isolated from the battery cell 100.

The buffer unit 400 is disposed between the first plate 200 and the second plate 300 and connects the first plate 200 to the second plate 300. The buffer unit 400 is disposed to change the location of the second plate 300 relative to the first plate 200 in association with volume change of the battery cell 100. For example, upon expansion of the battery cells 100 due to rapid charge, as the volume increase of the battery cells 100 is accumulated in the arrangement direction of the battery cells 100, that is, in the X-axis direction with reference to FIG. 1 to FIG. 4, the amount of displacement of the battery cells 100 in the X-axis direction is greater than the amount of displacement of the battery cells 100 in the Y-axis or Z-axis direction. The buffer unit 400 may act as a component for preventing excessive increase in sheet pressure applied to the battery cells 100 by shifting the second plates 300 with respect to the first plates 200 in the X-direction, that is, in a direction parallel to the first surface 101, by the displacement amount of the battery cells 100 in the X-axis direction of the battery cells 100.

The buffer unit 400 may be provided in plural. The plurality of buffer units 400 may be provided to corners of the battery module 1, respectively, to at least two of connecting points between the first plates 200 and the second plates 300. Although the buffer units 400 are provided by way of example to all of the corners of the battery module in the following description, it should be understood that the present disclosure is not limited thereto and the buffer unit 400 may be modified in various ways so long as the buffer units are provided to at least two corners of the battery module.

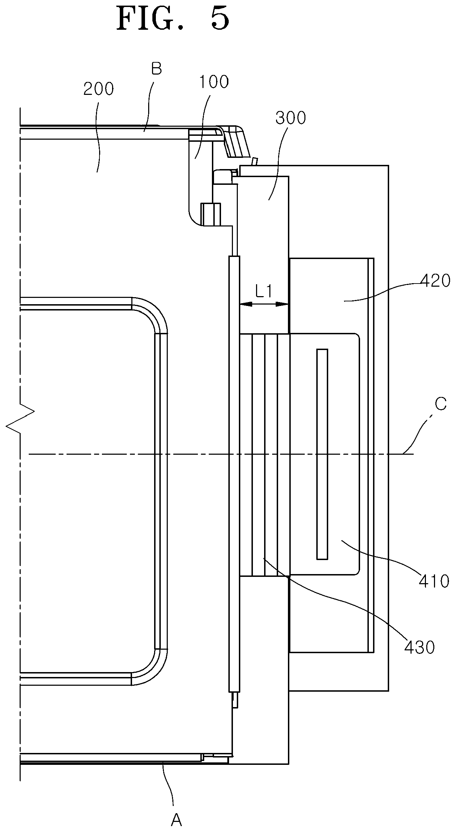

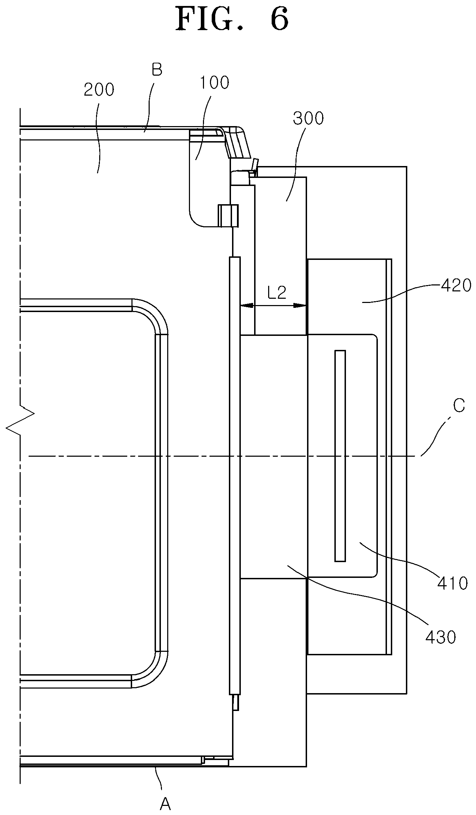

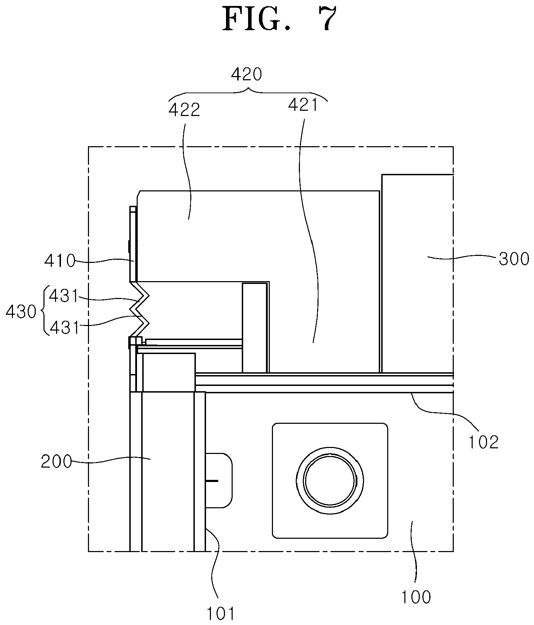

FIG. 5 is a side view of a buffer unit according to an embodiment of the present disclosure, FIG. 6 is a side view illustrating a stretched state of the buffer unit shown in FIG. 5, and FIG. 7 is a plan view of the buffer unit according to the embodiment of the present disclosure.

Referring to FIG. 5 to FIG. 7, the buffer unit 400 may include a first support member 410, a second support member 420, and a buffer member 430.

The first support member 410 extends from the first plate 200.

The first support member 410 may have a plate shape extending from one end of the first plate 200 in a longitudinal direction of the first plate 200, that is, in the X-axis direction thereof. The first support member 410 may be disposed parallel to the first surface 101. The first support member 410 may be realized as a pair of first support members 410 with respect to one of the first plates 200. The pair of first support members 410 may extend from longitudinally opposite ends of the first plate 200 in opposite directions.

The second support member 420 extends from the second plate 300 and is coupled to the first support member 410 to connect the first plate 200 to the second plate 300.

The second support member 420 may include a first extension 421 and a second extension 422.

The first extension 421 may form an outer appearance of one side of the second support member 420 and support the second extension 422 described below.

The first extension 421 may be formed in a column shape extending from an outer surface of the second plate 300 in a direction parallel to the first surface 101, that is, in the X-axis direction. The first extension 421 may be integrally coupled to the outer surface of the second plate 300 by welding or the like, or may be detachably coupled to the outer surface of the second plate 300 by bolting or the like. The first extension 421 may be disposed parallel to the first support member 410. The first extension 421 may be separated a predetermined distance from the first support member 410 in a direction parallel to the second surface 102, that is, in the Y-axis direction.

The first extension 421 may be realized as a pair of first extensions 421 with respect to one of the second plates 300. The pair of first extensions 421 may be spaced apart from each other in the direction parallel to the second surface 102, that is, in the Y-axis direction.

The second extension 422 defines an outer appearance of the other side of the second support member 420 and is coupled to the first support member 410.

The second extension 422 may be formed in a column shape extending from one end of the first extension 421 toward an inner surface of the first support member 410. The second extension 422 may be disposed parallel to the second surface 102. An inner surface of the second extension 422 may be separated a predetermined distance from an outer surface of the second plate 300. Accordingly, a space may be formed between the second extension 422 and the second plate 300 such that a buffer member 430 described below can be placed in the space.

The second extension 422 may have an end contacting the inner surface of the first support member 410. The end of second extension 422 may contact a portion of the entire area of the inner surface of the first support member 410. The end of the second extension 422 may be integrally coupled to the inner surface of the first support member 410 by various coupling methods, such as laser welding, bolting, bonding, and the like.

The second extension 422 may be provided in plural. Each of the second extensions 422 may individually extend from one end of the first extension 421.

The buffer member 430 may be stretchably provided to the first support member 410 to increase or decrease the length of the first support member 410 in a stretching/contraction direction. That is, the buffer member 430 may act as a component for generating displacement of the second plate 300 through increase or decrease in length of the first support member 410 upon volume change of the battery cell 100. By way of example, the buffer member 430 may be disposed in a region to face the space between the second extension 422 and the second plate 300 among the entire region of the first support member 410 instead of being directly coupled to the second extension 422.

The buffer member 430 may be formed symmetrically with respect to a center line C of the first plate 200. Here, the center line of the first plate 200 may be exemplified as a straight line that symmetrically divides the first plate 200 into an upper region and a lower region among straight lines parallel to the X-axis, as shown in FIG. 5. With this structure, the buffer member 430 may prevent the second plate 300 from shifting at a tilted angle during stretching or contraction thereof and may prevent local increase in pressure between the battery cell 100 and the second plate 300.

The buffer member 430 may be elastically deformable. For example, the buffer member 430 may be formed of an elastic material, such as rubber, silicone, synthetic resins, and the like. Thus, in normal operation of the battery cells 100, the buffer member 430 may induce a sufficient sheet pressure between the battery cells 100 and the second plate 300 through inherent elastic restoration force. Further, if the volume of the battery cells 100 is reduced, the buffer member 430 may be contracted by inherent elastic restoration force thereof and may return the second plate 300 to an initial location thereof.

A difference L2-L1 between a contraction length L1 and an extension length L2 of the buffer member 430 may be 2 mm or less. The contraction length L1 of the buffer member 430 is an initial length of the buffer member 430, for example, 7 mm, if the battery cells 100 are not expanded. The extension length L2 of the buffer member 430 is the maximum extension length of the buffer member 430, for example, 9 mm, upon expansion of the battery cells 100.

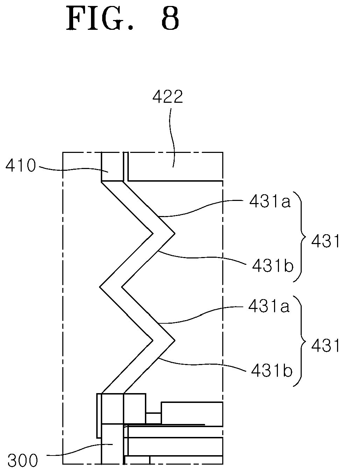

FIG. 8 is an enlarged view of a buffer member according to an embodiment of the present disclosure.

Referring to FIG. 8, the buffer member 430 may include a wrinkle portion 431.

The wrinkle portion 431 is a unit structure constituting the buffer member 430 and may be formed in a shape having a center protruding from the first support member 410 in a direction intersecting the longitudinal direction of the first support member 410. The wrinkle portion 431 may be folded or unfolded with reference to the center thereof to change the length of the first support member 410.

The wrinkle portion 431 may protrude from the inner surface of the first support member 410 toward the space between the second extension 422 and the second plate 300. With this structure, the wrinkle portion 431 may prevent interference with foreign matter or an adjacent component disposed on the outer surface of the first support member 410.

The buffer member 430 may include two or less wrinkle portions 431. For example, as shown in FIG. 8, the buffer member 430 may include two wrinkle portions 431. With this structure, each of the wrinkle portions 431 may secure a sufficient thickness to prevent breakage in unfolding operation. However, it should be understood that the number of wrinkle portions 431 is not limited thereto and the buffer member 430 may include one wrinkle portions 431 depending on the length thereof.

The wrinkle portion 431 may include a first bent portion 431a and a second bent portion 431b.

The first bent portion 431a may be formed in a plate shape tilted at a predetermined angle with respect to the longitudinal direction of the first support member 410. One end (right-side end in FIG. 8) of the first bent portion 431a may be disposed in the space between the second extension 422 and the second plate 300. The other end (left-side end in FIG. 8) of the first bent portion 431a may be connected to the first support member 410 or to the second bent portion 431b of an adjacent wrinkle portion 431.

The second bent portion 431b may be formed in a plate shape tilted at a predetermined angle with respect to the longitudinal direction of the first bent portion 431a. The second bent portion 431b may be disposed to intersect the first bent portion 431a at a predetermined angle.

One end (right-side end in FIG. 8) of the second bent portion 431b may be disposed in the space between the second extension 422 and the second plate 300. The one end of the second bent portion 431b may be connected to one end of the first bent portion 431a. The first bent portion 431a and the second bent portion 431b may change the length of the wrinkle portion 431 while rotating in opposite directions with respect to one end thereof upon volume change of the battery cell 100.

The other end (left-side end in FIG. 8) of the second bent portion 431b may be connected to the first support member 410 or to the other end of the first bent portion 431a of an adjacent wrinkle portion 431. The other end of each of the first bent portion 431a and the second bent portion 431b may be disposed coplanar with the outer surface of the first support member 410 so as not to protrude outwards from the first support member 410.

The first bent portion 431a may have a different thickness than the second bent portion 431b. The one end of the first bent portion 431a may have a different width than the one end of the second bent portion 431b. Accordingly, a user can change the magnitude of elastic restoration force of the wrinkle portion 431 by freely changing the thicknesses and widths of the first bent portion 431a and the second bent portion 431b according to the kind of battery cell 100 and the like.

Next, operation of the battery module 1 will be described in detail.

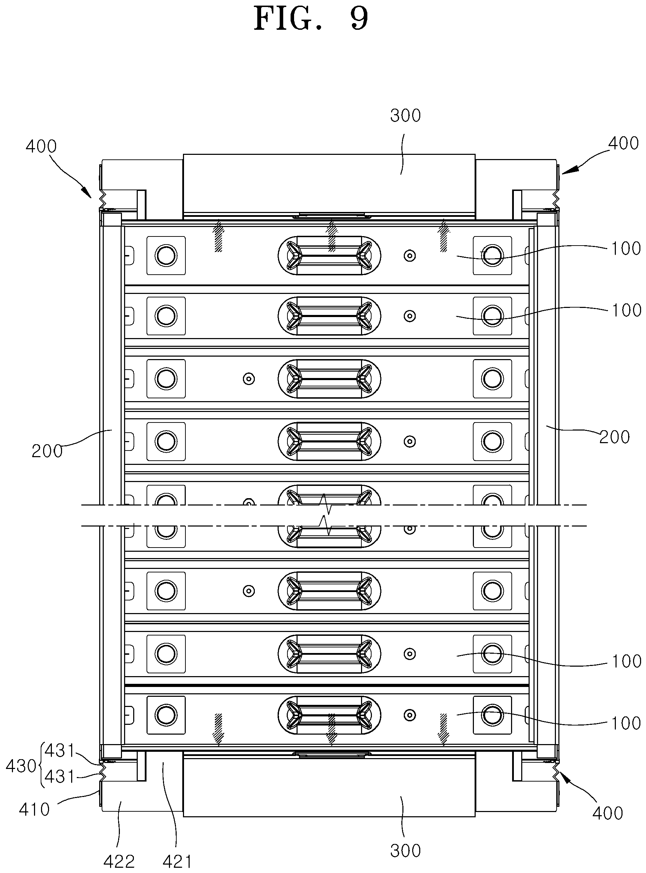

FIG. 9 to FIG. 11 are schematic views illustrating operation of the battery module according to the embodiment of the present disclosure.

Referring to FIG. 9, upon expansion of the battery cells 100 due to rapid charge of the battery cells 100, the length of the plurality of battery cells 100 arranged in the direction parallel to the first surface 101, that is, in the X-axis direction, increases.

Such change in length increases the magnitude of pressing force applied from the second surfaces 102 of the pair of battery cells 100 disposed at the opposite ends of the battery module among the plurality of battery cells 100 to the second plates 300 in the direction parallel to the X-axis.

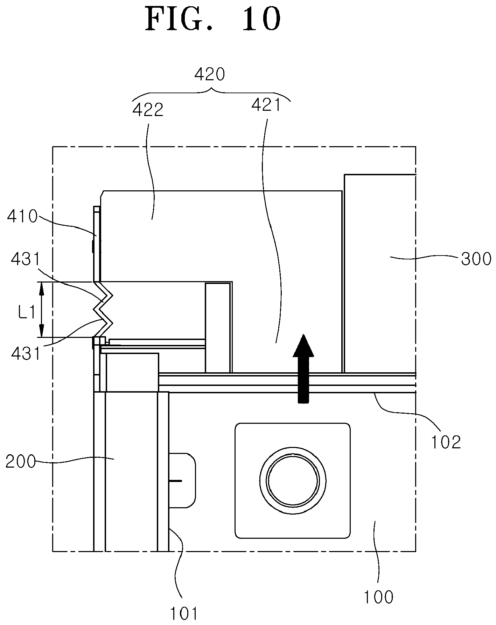

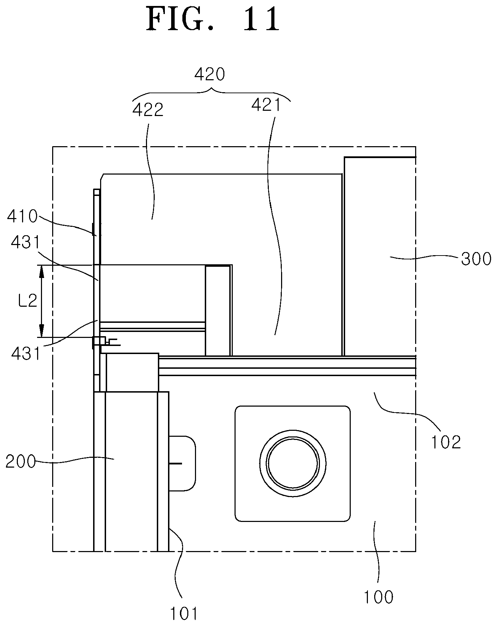

Referring to FIG. 10 and FIG. 11, the length of the buffer member 430 increases in association with increase in pressing force applied to the second plate 300.

For example, the pressing force applied to the second plate 300 in the X-axis direction is transferred to the buffer member 430 sequentially through the second plate 300, the second support member 420 and the first support member 410 and is converted into tensile force that stretches the buffer member 430 in the direction parallel to the X-axis.

The first bent portion 431a and the second bent portion 431b increase the length of the wrinkle portion 431 while rotating in a direction away from each other about one end thereof.

As the length of the wrinkle portion 431 increases, the length of the buffer member 430 also increases from the contraction length L1 to the extension length L2.

Then, the second plate 300 reduces pressure generated between the second plate 300 and the second surface 102 of the battery cell 100 while moving in the direction parallel to the X-axis by the difference L2-L1 between the contraction length L1 and the extension length L2.

Although the present disclosure has been described with reference to some example embodiments, it should be understood by those skilled in the art that these embodiments are given by way of illustration only, and that various modifications, variations and alterations can be made without departing from the scope of the invention.

Therefore, the scope of the present disclosure should be limited only by the accompanying claims and equivalents thereto.

## Claims

1. A battery module comprising:
a battery cell having a first surface and a second surface disposed to intersect the first surface;
a first plate disposed to face the first surface;
a second plate disposed to face the second surface; and
a buffer unit interposed between the first plate and the second plate and configured to change a location of the second plate relative to the first plate in association with volume change of the battery cell.

2. The battery module as claimed in claim 1, wherein the battery cell is provided in plural and the plural battery cells are sequentially arranged in a direction parallel to the first surface.

3. The battery module as claimed in claim 1 or claim 2, wherein the buffer unit is configured to shift the second plate in a direction parallel to the first surface in association with volume change of the battery cell.

4. The battery module as claimed in any one of claims 1 to 3, wherein the buffer unit is provided in plural and the plural buffer units are provided to at least two corners among corners of the battery module.

5. The battery module as claimed in any one of claims 1 to 4, wherein the buffer unit comprises:
a first support member extending from the first plate;
a second support member extending from the second plate and coupled to the first support member; and
a buffer member stretchably provided to the first support member and configured to increase or decrease a length of the first support member in a stretching/contraction direction.

6. The battery module as claimed in claim 5, wherein the first support member is disposed parallel to the first surface.

7. The battery module as claimed in claim 5 or claim 6, wherein the buffer member is formed symmetrically with respect to a centerline of the first plate.

8. The battery module as claimed in any one of claims 5 to 7, wherein the buffer member is elastically deformable.

9. The battery module as claimed in any one of claims 5 to 8, wherein a difference between a contraction length and an extension length of the buffer member is 2 mm or less.

10. The battery module as claimed in any one of claims 5 to 9, wherein the buffer member comprises a wrinkle portion protruding in a direction intersecting a longitudinal direction of the first support member.

11. The battery module as claimed in claim 10, wherein the buffer member comprises two or less wrinkle portions.

12. The battery module as claimed in claim 10 or claim 11, wherein the second support member comprises:
a first extension extending from the second plate and disposed parallel to the first support member; and
a second extension extending from the first extension towards the first support member, spaced apart from the second plate, and coupled to the first support member, and
wherein the wrinkle portion protrudes from the first support member towards a space between the second extension and the second plate.

13. The battery module as claimed in claim 12, wherein the winkle portion comprises:
a first bent portion tilted with respect to the longitudinal direction of the first support member; and
a second bent portion tilted with respect to a longitudinal direction of the first bent portion and having one end connected to one end of the first bent portion.

14. The battery module as claimed in claim 13, wherein the one end of each of the first bent portion and the second bent portion is disposed in the space between the second extension and the second plate.

15. The battery module as claimed in claim 14, wherein the other end of each of the first bent portion and the second bent portion is disposed coplanar with an outer surface of the first support member.
